# EUROPEAN PATENT SPECIFICATION

(11) **EP 3 574 229 B1**
(45) Date of publication and mention of the grant of the patent: **24.03.2021**
(21) Application number: 18703244.6
(22) Date of filing: 24.01.2018
(51) Int. Cl.: F16D 66/02, F16D 69/02

(54) **BRAKE PAD AND MANUFACTURE METHOD THEREOF**
BREMSBELAG UND BREMSBELAGHERSTELLUNGSVERFAHREN
GARNITURE DE FREIN ET PROCEDE DE MANUFACTURE D'UNE TELLE GARNITURE

(30) Priority: 03.02.2017 GB 201701760
(43) Date of publication of application: 04.12.2019
(73) Proprietor: Vyncolit N.V., 9000 Gent (BE)
(72) Inventor: DE KEYSER, Hendrik, 9000 Gent (BE)
(74) Representative: Jenkins, Peter David
(86) International application number: PCT/EP2018/051756
(87) International publication number: WO 2018/141604

(56) References cited:
- EP-A2- 0 916 868
- DE-A1-102006 060 524
- GB-A- 2 156 925

## Description

### Background to the Invention

The present invention relates to a brake pad and to method of manufacturing a brake pad.

### Description of the Prior Art

It is known to manufacture brake pads for automotive and other applications in which a layer of friction material is bonded to a back plate. Such brake pads are disclosed in EP-A-2913552 and EP-A-2921736. Those specifications disclose the manufacture of a backing plate of a fibre-reinforced phenolic resin bonded to the layer of friction material, with the interface between the backing plate and layer of friction material being profiled with a ridge/groove construction.

While those known brake pads provide high brake performance and can be efficiently manufactured, it would be desirable to provide a brake pad additionally having enhanced functionality, and a method of manufacturing such a brake pad cost-effectively and reliably. It would also be desirable to avoid the requirement for a ridge/groove construction at the interface between the backing plate and layer of friction material, because this complicates the manufacturing process and provides a central area of friction material which cannot contribute to the useful lifetime of the brake pad.

It is also known to provide a brake wear indicator for a disc brake system of an automobiles. For example, US-A-4742326 discloses a sliding-caliper disc brake assembly which includes an H-shaped anti-rattle spring for a brake backing plate that is movable directly by a brake apply piston and an electrical lining wear indicator comprising a mounting portion molded from electrically insulating plastics material with an embedded loop of electrical contact wire fastened on to a central region of the anti-rattle spring.

DE-A-10 2006 060524 discloses a brake block lining with a wear detector which includes an electrical conductor embedded in the brake lining parallel to the surface facing the brake disc. The conductor is arranged around an edge of the brake lining or forms a loop in the lining.

There is a need in the art to provide a less complicated, low cost and reliable brake wear indicator, in particular for a disc brake system of an automobiles.

The present invention aims at least partially to meet this need associated with known brake pad manufacturing technology.

### Summary of the Invention

The present invention provides a brake pad according to claim 1.

In one embodiment, a free end of at least one projection is within the layer of friction material and spaced forwardly from the interface by a distance of from 1 to 8 mm, optionally about 3 mm.

Preferably, a plurality of the projections is provided and respective free ends of at least two of the projections are located at different distances relative to the interface. Optionally, respective free ends of the plurality of projections are located at a range of from 0 to 5 mm, optionally from 1 to 5 mm, from the interface.

Preferably, the electroconductive member is composed of a metal, optionally a steel, further optionally a steel treated with an adhesion enhancing layer to enhance adhesion to the fibre-reinforced polymer resin. Preferably, the metal electroconductive member is a plate having a wall thickness of from 0.5 to 3 mm.

Typically, the electroconductive member has a rear surface which is located a distance of from 0.1 to 3 mm, optionally from 0.5 to 2 mm, from a rear surface of the backing plate.

Preferably, the fibre-reinforced polymer resin comprises a thermoset resin comprising reinforcing fibres, optionally a cross-linked phenolic resin comprising reinforcing fibres, optionally further comprising at least one filler material. Typically, the friction material comprises a cross-linked phenolic resin and friction particles dispersed therein.

The brake pad preferably further comprises an electrical contact member connected to the electroconductive member for electrical connection to an electrical brake wear sensor system.

Typically, the backing plate has a thickness of from 1 to 10 mm, optionally about 5 mm. Typically, the layer of friction material has a thickness of from 5 to 20 mm, optionally about 10 mm. Typically, the electroconductive member has an area extending along the plate direction which is from 50 to 100 % of the area of the layer of friction material.

The brake pad is preferably an automotive brake pad for an automobile, motor cycle or truck or a railway brake pad for a railway locomotive, carriage or truck.

The present invention further provides a method of manufacturing a brake pad according to claim 9.

Optionally, in step (a) the fibre-reinforced polymer resin is introduced into the mould cavity by injection of the fibre-reinforced polymer resin around the electroconductive member which is located in the cavity.

Optionally, in step (b) the layer of friction material is located adjacent to the assembly and adjacent contacting surfaces of the layer of friction material and the assembly are bonded together during the moulding step (b).

Optionally, in step (b) the layer of friction material is a rigid preform, optionally which has been pre-shaped to the final shape and configuration of the layer of friction material of the brake pad.

The present invention yet further provides a method of manufacturing a brake pad according to claim 11.

Optionally, step (b) comprises the following substeps: (i) the polymer resin powder is scattered onto the layer of fibrous material; (ii) an alternating electrical field is applied across the layer of fibrous material to impregnate the polymer resin powder through the thickness of the layer of fibrous material; (iii) the impregnated layer is compressed to consolidate the resin-impregnated fibrous layer; (iv) the consolidated layer is heated so as at least partly to cure the resin; and (v) the at least partly cured layer is cut to form a plurality of the portions of the preform layer.

Optionally, in step (c) the layer of friction material is located adjacent to the assembly and adjacent contacting surfaces of the layer of friction material and the assembly are bonded together during the moulding step (d).

Optionally, in step (c) the friction material is a rigid preform layer, optionally which has been pre-shaped to the final shape and configuration of the layer of friction material of the brake pad.

The preferred embodiments of the present invention provide brake pads, and various methods for manufacturing such brake pads, which can readily integrate a brake wear indicator into the brake pad. The brake pad maintains high brake performance and additionally can include a brake wear component in the form of an electroconductive plate which can be readily be incorporated into the brake pad manufacturing process at low product cost and low capital cost. The brake wear component also functions to stiffen or rigidify the backing plate, which therefore strengthens the brake pad. In the preferred embodiment, the brake wear component is a corrugated metal plate which stiffens or rigidifies the back plate, in particular along the longitudinal direction of the grooves of the corrugated metal plate. The brake wear component is robust and provides a reliable indication of brake wear after a defined amount of wear of the brake pad, or after a defined amount of the friction material remains. The brake wear component can readily be structured to provide a series of signals representing progressive brake wear over a range of brake wear thicknesses. The brake wear component can be structured and located to enhance the bonding between the backing plate and the layer of friction material.

### Brief Description of the Drawings

Figure 1 is a schematic side cross-section through a brake pad not according to the present invention;
Figure 2 is a schematic side cross-section through a brake pad not according to the present invention;
Figure 3 is a schematic process flow of a method for manufacturing the brake pad of Figure 1 or Figure 2 according to an embodiment of the method of the present invention;
Figure 4 is a schematic process flow of a method for manufacturing the brake pad of Figure 1 or Figure 2 according to another embodiment of the method of the present invention;
Figure 5 is a side view, partly in phantom, of a brake pad according to an embodiment of the present invention; and
Figure 6 is a schematic perspective view, partly in phantom, of the brake pad of Figure 5.

### Detailed Description of the Preferred Embodiments

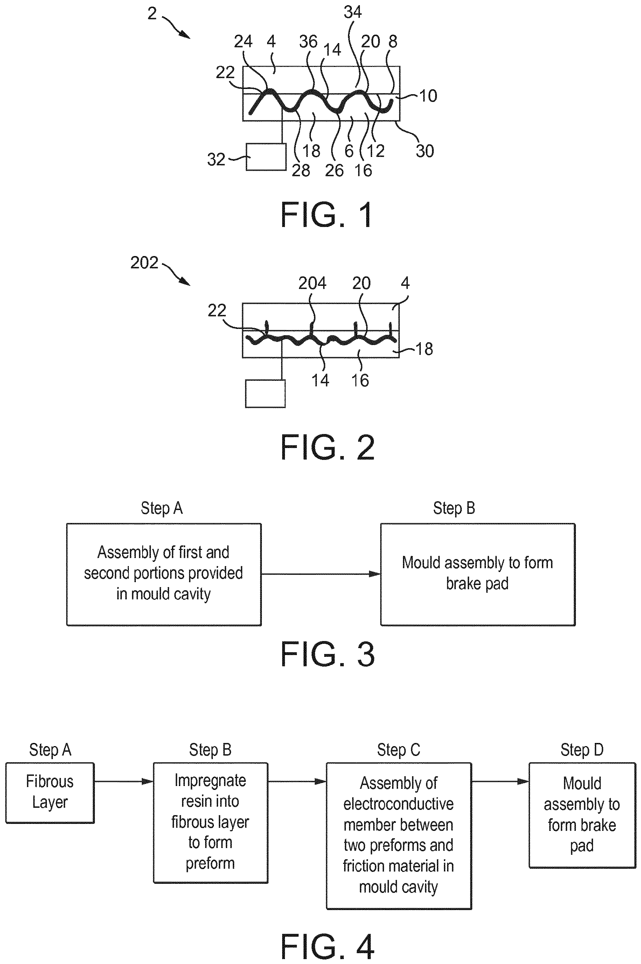

Referring to Figure 1, there is shown a brake pad 2 not according to the present invention. The brake pad 2 is an automotive brake pad for an automobile, motor cycle or truck or alternatively a railway brake pad for a railway locomotive, carriage or truck.

The brake pad 2 comprises a layer of friction material 4 integrally moulded with a backing plate 6. The friction material 4 comprises a cross-linked phenolic resin and friction particles dispersed therein. The layer of friction material 4 has a thickness of from 5 to 15 mm, optionally about 10 mm.

The backing plate 6 has a front surface 8 forming an interface 10 with a rear surface 12 of the layer of friction material 4. The backing plate 6 has a thickness of from 1 to 10 mm, optionally about 5 mm.

The backing plate 6 comprises an electroconductive member 14 moulded within a plate 16 of a fibre-reinforced polymer resin 18. The electroconductive member 14 extends along the plate direction. The electroconductive member 14 typically has an area extending along the plate direction which is from 50 to 100 % of the area of the layer of friction material 4.

The fibre-reinforced polymer resin 18 comprises a thermoset resin comprising reinforcing fibres. Typically, the resin is a cross-linked phenolic resin comprising reinforcing fibres, optionally further comprising at least one filler material. The reinforcing fibres may comprise a layer of non-woven fibres.

Suitable phenolic resins for the backing plate 6 and the friction material 4, and suitable moulding conditions to achieve the bonding together of the backing plate 6 and the friction material 4, are disclosed in EP-A-2913552 and EP-A-2921736 which disclose the manufacture of a backing plate of a fibre-reinforced phenolic resin bonded to a layer of friction material.

The electroconductive member 14 is composed of a metal, typically a steel. The steel surface may have been treated with an adhesion enhancing layer to enhance adhesion to the fibre-reinforced polymer resin 18.

The metal electroconductive member 14 is a plate having a wall thickness of from 0.5 to 3 mm. The electroconductive member 14 in this embodiment comprises a corrugated plate 20. The corrugated plate 20 has a pitch between the corrugations 22 of from 1 to 4 mm. The corrugated plate 20 has a bulk thickness extending between opposite corrugated outer surfaces 24, 26 of from 3 to 10 mm.

The electroconductive member 14 has a rear surface 28 which is located a distance of from 0.1 to 3 mm, optionally from 0.5 to 2 mm, from a rear surface 30 of the backing plate 6. The corrugated plate 20 stiffens or rigidifies the backing plate 6, in particular along the longitudinal direction of the grooves of the corrugated plate 20.

The electroconductive member 14 is arranged to function as a wear indicator for the brake pad 2. An electrical contact member 30 is connected to the electroconductive member 14 for electrical connection to an electrical brake wear sensor system 32.

The electroconductive member 14 is profiled in a thickness direction of the backing plate 6 to provide at least one projection 34 extending towards the interface 10. In this embodiment, the at least one projection 34 comprises at least one corrugation 22 of the corrugated plate 20. Preferably, and in the illustrated embodiment, the at least one projection 34 extends into the layer of friction material 4. Alternatively, at least one projection 34 terminates at the interface 10.

A free end 36 of at least one projection 34 is within the layer of friction material 4 and spaced forwardly from the interface 10 by a distance of from 1 to 8 mm, optionally about 3 mm.

In an alternative construction, additionally a free end 36 of at least one projection 34 is located at the interface 10.

In another alternative construction, a plurality of the projections 34 is provided and respective free ends 36 of at least two of the projections 34 are located at different distances relative to the interface 34. Typically, respective free ends 36 of the plurality of projections 34 are located at a range of from 0 to 5 mm, optionally from 1 to 5 mm, from the interface 10.

In use, as the brake pad 2 progressively wears due to cumulative braking use, the friction material surface is worn away and the working front surface of the layer of friction material 4 moves rearwardly towards the electroconductive member 14. Eventually, the disc brake, or other metallic braking member against which the brake pad 2 acts, contacts one of the projections 34, to form an electrical connection between the electroconductive member 14 and the disc brake. This action closes an electrical circuit which is detected by the electrical brake wear sensor system 32. This provides a warning to the driver that the brake pad has been worn down and requires replacement. When the projections 34 are located in front of the interface 34 between the layer of friction material 4 and the backing plate 6, the brake wear indicator system ensures that a signal of brake wear is sent before the layer of friction material 4 has fully worn away and before the brake disc could contact the backing plate 6 during a braking operation. When at least two of the projections 34 are located at different distances relative to the interface 34, this can provide a sequential indication of progressive brake wear and can provide a fail-safe system in the event that a first projection fails to continue to provide a reliable electrical contact with the brake disc.

Referring to Figure 2, there is shown an alternative brake pad 202 not according to the present invention. This embodiment is the same as for Figure 1, except that in addition to providing corrugations 22 of the corrugated plate 20, the at least one projection comprises at least one deformed portion 204 extending from the plate 20 towards the interface or into the layer of friction material 4. The deformed portion 204 is formed by punching a hole in the plate 20 to form a punched extension extending from the plate 20 towards the interface 10 or into the layer of friction material 4.

The deformed portion 204 functions to enhance a bond between the electroconductive member 14 and the plate 16 of fibre-reinforced polymer resin 18.

In another embodiment, the electroconductive member 14 has a front surface, defined by the front surface of a plurality of the projections 22 or 204, optionally the front surface of a plurality of corrugations 22, which is located against the front surface 8 of the backing plate 6.

A first method of manufacturing the brake pad 2 will now be described with reference to Figure 3. This method employs injection moulding to form the backing plate having a wear indicator.

The method has a first step A of providing in a mould cavity an assembly comprising a first portion comprising an electroconductive member within a fibre-containing polymer resin. A second portion comprising a friction material is adjacent to the first portion. In the first step A, the fibre-reinforced polymer resin is introduced into the mould cavity by injection of the fibre-reinforced polymer resin around the electroconductive member which is located in the cavity.

In a second step B, the assembly 54 is moulded to form a brake pad 66. The brake pad 66 comprises a layer of the friction material 64, formed from the second portion 62, integrally moulded with a backing plate 68, formed from the first portion 56. The backing plate 68 comprises the electroconductive member 58 moulded within a plate 70 of fibre-reinforced polymer resin.

As described with reference to Figures 1 and 2, the electroconductive member 58 extends along a plate direction. The backing plate 68 has a front surface forming an interface 72 with a rear surface of the layer of friction material 64. The electroconductive member 58 is profiled in a thickness direction of the backing plate 68 to provide at least one projection 74 extending towards the interface 72 or into the layer of friction material 64 and arranged to function as a wear indicator for the brake pad 66.

In the second step B, the layer of friction material 64 is located adjacent to the assembly 54 and adjacent contacting surfaces of the layer of friction material 64 and the assembly 54 are bonded together during the moulding step in the second step B. The layer of friction material 64 is a rigid preform 76. Typically, the preform 76 has been pre-shaped to the final shape and configuration of the layer of friction material 64 of the brake pad 66.

A second method of manufacturing the brake pad 2 will now be described with reference to Figure 4. This method employs powder impregnation to form the backing plate having a wear indicator.

The method has a first step A of providing a layer of fibrous material 80.

In a second step B, a polymer resin powder 82 is impregnated into the layer of fibrous material 80 to form a preform layer 84.

The second step B comprises the following substeps: (i) the polymer resin powder is scattered onto the layer of fibrous material 80; (ii) an alternating electrical field is applied across the layer of fibrous material 80 to impregnate the polymer resin powder through the thickness of the layer of fibrous material 80; (iii) the impregnated layer is compressed to consolidate the resin-impregnated fibrous layer; (iv) the consolidated layer is heated so as at least partly to cure the resin; and (v) the at least partly cured layer is cut to form a plurality of the portions of the preform layer 84.

In a third step C, an assembly 86 is formed in a mould cavity 88. The assembly 86 comprises a sandwich 90 of an electroconductive member 92 between two portions of the preform layer 84 and, adjacent to the sandwich 90, a friction material 94. The friction material 94 is a rigid preform layer. Typically, the rigid preform layer has been pre-shaped to the final shape and configuration of the layer of friction material 94 of the resultant brake pad.

In a fourth step D, the assembly 86 is moulded to form a brake pad 96. The layer of friction material 94 is located adjacent to the assembly 86 and adjacent contacting surfaces of the layer of friction material 94 and the assembly 86 are bonded together during the moulding step.

The resultant brake pad 96 comprises a layer of friction material 94 integrally moulded with a backing plate 98 formed from the sandwich 90. The backing plate 98 comprises the electroconductive member 92 moulded within a body 100 of a fibre-reinforced polymer resin. The body 100 and the electroconductive member 92 forming first and second aligned plates extending along a plate direction. The body 100 has a front surface 102 forming an interface 104 with a rear surface 106 of the layer of friction material 94. The electroconductive member 92 is profiled in a thickness direction of the body 100 to provide at least one projection 106 extending towards the interface 104 or into the layer of friction material 94 and arranged to function as a wear indicator for the brake pad 96.

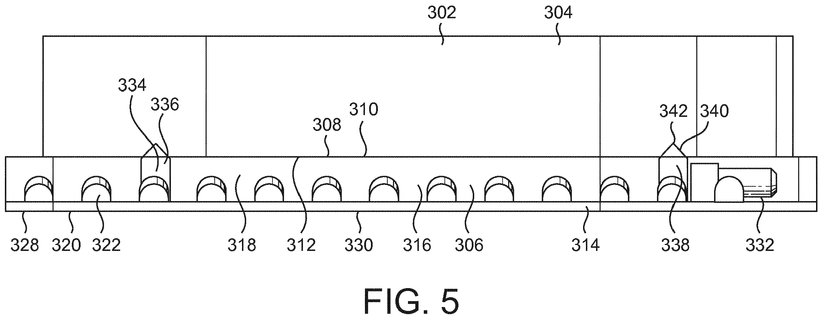

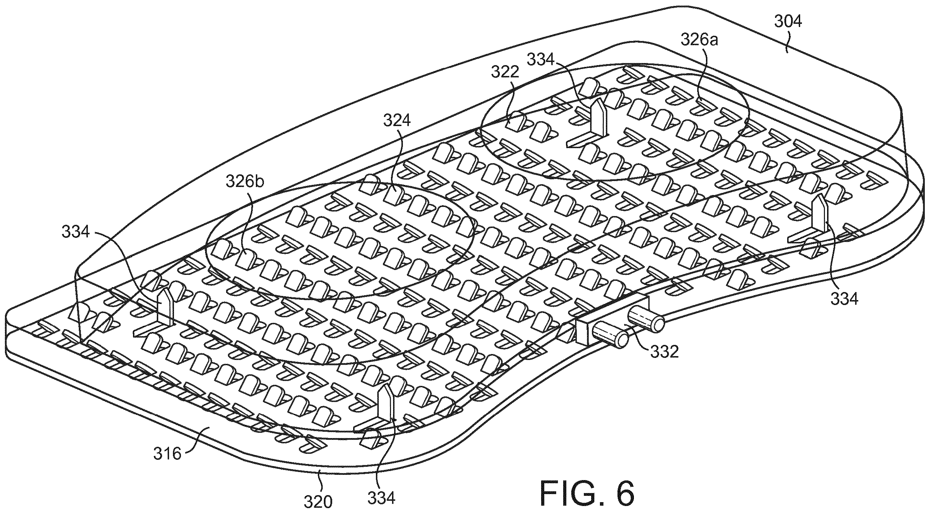

Referring to Figures 5 and 6, there is shown a brake pad 302 according to an embodiment of the present invention. The brake pad 302 is an automotive brake pad for an automobile, motor cycle or truck or alternatively a railway brake pad for a railway locomotive, carriage or truck.

The brake pad 302 comprises a layer of friction material 304 integrally moulded with a backing plate 306. The friction material 304 comprises a cross-linked phenolic resin and friction particles dispersed therein. The layer of friction material 304 has a thickness of from 5 to 15 mm, optionally about 10 mm.

The backing plate 306 has a front surface 308 forming an interface 310 with a rear surface 312 of the layer of friction material 304. The backing plate 306 has a thickness of from 3 to 10 mm, optionally about 5 mm.

The backing plate 306 comprises an electroconductive member 314 moulded at least partly within a plate 316 of a fibre-reinforced polymer resin 318. The electroconductive member 314 extends along the plate direction. The electroconductive member 314 typically has an area extending along the plate direction which is from 50 to 100 % of the area of the layer of friction material 304. The electroconductive member 314 stiffens or rigidifies the backing plate 306.

The fibre-reinforced polymer resin 318 and the friction material 304 may have the same compositions as described above for the first embodiment, and suitable moulding conditions are employed to achieve the bonding together of the backing plate 306 and the friction material 304, as described above.

The electroconductive member 314 is composed of a metal plate, or sheet, typically a steel. As described above, the steel surface may have been treated with an adhesion enhancing layer, for example by an adhesion coating, plasma treatment or chemical treatment, to enhance adhesion to the fibre-reinforced polymer resin 318.

The metal plate has a wall thickness of from 0.5 to 3 mm, typically 1 mm. The electroconductive member 314 in this embodiment comprises a planar plate 320 which has been punched, to form holes in the planar plate 320 to press out an array of integral extending portions 322 which extend forwardly from the planar plate 320 into the body of the plate 316 of fibre-reinforced polymer resin 318. The array of extending portions 322 extends into, and is moulded within, the plate 316 so that the electroconductive member 314 is securely affixed to the plate 316, and thereby provide that the backing plate 306 has a unitary structure. The extending portions 322 are oriented in different directions, typically opposite directions, within the plate 316 to enhance the bonding between the electroconductive member 314 and the plate 316.

In the illustrated embodiment, the extending portions 322 comprise substantially semi-circular pressed elements which are inclined at an acute angle, for example from 30 to 60 degrees, such as about 45 degrees, to the planar plate 320. The extending portions 322 form a regular array 324, for example a rectangular array 324. The extending portions 322 include a first sub-array 326a of a plurality of first extending portions 322 being oriented in a first direction and a second sub-array 326b of a plurality of second extending portions 322 being oriented in an opposite second direction. Each sub-array 326a, 326b comprises a plurality of lines of the respective extending portions 322. The sub-arrays 326a, 326b overlap, so that the regular array 324 of extending portions 322 comprises alternating lines of first extending portions 322 and second extending portions 322. However, other arrangements of the extending portions 322 can be employed in accordance with the present invention.

The extending portions 322 extend into the plate 316 by a distance of from 2 to 5 mm. The spacing between the extending portions 322 is from 2 to 15 mm. The electroconductive member 314 has a rear surface 328 which defines the rear surface 330 of the backing plate 306, and the planar plate 320 is located adjacent to the rear surface of the plate 316 of fibre-reinforced polymer resin 318. Alternatively, the electroconductive member 314 may be moulded within the plate 316 of fibre-reinforced polymer resin 318 and the rear surface 328 is located a distance of from 0.1 to 3 mm, optionally from 0.5 to 2 mm, from the rear surface of the backing plate 306.

The electroconductive member 314 is arranged to function as a wear indicator for the brake pad 302. An electrical contact member 332 is connected to the electroconductive member 314 for electrical connection of the electroconductive member 314 to an electrical brake wear sensor system (as shown in Figures 1 and 2).

The electroconductive member 314 is profiled in a thickness direction of the backing plate 306 to provide at least one projection 334 extending towards the interface 310. In this embodiment, the at least one projection 334 comprises at least one pressed element 336 extending into the layer of friction material 304. Alternatively, at least one projection 334 terminates at the interface 310. In the illustrated embodiment, there are four pressed elements 336, each located in the vicinity of a respective corner of the brake pad 302. Each pressed element 336 has been formed by punching the planar plate 320 to press out the pressed element 336 so as to be orthogonal to, and extend forwardly from, the planar plate 320 so as to extend into the body of the plate 316 of fibre-reinforced polymer resin 318. A body part 338 of the pressed element 336 is located within the plate 316 of fibre-reinforced polymer resin 318 and a tip part 340 of the pressed element 336 extends into the layer of friction material 304. A free end 342 of at least one projection 334 is within the layer of friction material 304 and spaced forwardly from the interface 310 by a distance of from 1 to 8 mm, typically from 1 to 3 mm.

The brake pad 302 of the embodiment of Figures 5 and 6 may be manufactured as described hereinabove with reference to Figures 3 and 4.

In use, the brake pad 302 is incorporated into a brake system of a vehicle. As the layer of friction material 304 becomes progressively worn away through use, eventually the free end 342 becomes exposed at the surface of the layer of friction material 304. When the free end 342 contacts a metallic part of the brake system, for example a disc against which the brake pad 302 is urged in a braking operation, an electrical circuit is completed by the electroconductive member 314, sending an electrical signal from the electroconductive member 314 to the electrical brake wear sensor system. Accordingly, the brake pad 302 incorporates an integral wear indicator for the brake pad 302.

## Claims

1. A brake pad (302) comprising a layer of friction material (304) integrally moulded with a backing plate (306), wherein the backing plate comprises an electroconductive member (314), which electroconductive member (314) comprises an electroconductive planar plate (320), moulded at least partly within a plate (316) of a fibre-reinforced polymer resin (318), the electroconductive member extending along a plate direction, the backing plate having a front surface (308) forming an interface (310) with a rear surface (312) of the layer of friction material, wherein the electroconductive member is profiled in a thickness direction of the backing plate to provide at least one projection (334) extending towards the interface or into the layer of friction material and arranged to function as a wear indicator for the brake pad, wherein the at least one projection (334) comprises at least one deformed portion extending from the planar plate towards the interface or into the layer of friction material, the deformed portion being formed by punching a hole in the planar plate to form a punched extension extending from the planar plate towards the interface or into the layer of friction material, the deformed portion functioning to enhance a bond between the electroconductive member and the plate of fibre-reinforced polymer resin, and wherein the planar plate (320) has an array of integral extending portions (322) extending from the planar plate into the plate of fibre-reinforced polymer resin to affix together the electroconductive member and the plate of fibre-reinforced polymer resin, the extending portions being formed by punching respective holes in the planar plate.

2. A brake pad according to claim 1 wherein (i) a free end (342) of at least one projection (334) is within the layer of friction material and spaced forwardly from the interface by a distance of from 1 to 8 mm, optionally about 3 mm and/or (ii) wherein a plurality of the projections is provided and respective free ends of at least two of the projections are located at different distances relative to the interface, optionally wherein respective free ends of the plurality of projections are located at a range of from 0 to 5 mm, further optionally from 1 to 5 mm, from the interface.

3. A brake pad according to claim or claim 2 wherein (i) the electroconductive member is composed of a metal, optionally a steel, further optionally a steel treated with an adhesion enhancing layer to enhance adhesion to the fibre-reinforced polymer resin and optionally (ii) the metal electroconductive member is a plate having a wall thickness of from 0.5 to 3 mm.

4. A brake pad according to any one of claims 1 to 3 wherein the electroconductive member has a rear surface (328) which defines a rear surface (330) of the backing plate or is located a distance of from 0.1 to 3 mm, optionally from 0.5 to 2 mm, from a rear surface of the backing plate.

5. A brake pad according to any one of claims 1 to 4 wherein (i) the fibre-reinforced polymer resin comprises a thermoset resin comprising reinforcing fibres, optionally a cross-linked phenolic resin comprising reinforcing fibres, optionally further comprising at least one filler material, and/or (ii) the friction material comprises a cross-linked phenolic resin and friction particles dispersed therein.

6. A brake pad according to any one of claims 1 to 5 further comprising an electrical contact member (332) connected to the electroconductive member for electrical connection to an electrical brake wear sensor system.

7. A brake pad according to any one of claims 1 to 6 wherein (i) the backing plate has a thickness of from 1 to 10 mm, optionally about 5 mm, and/or (ii) the layer of friction material has a thickness of from 5 to 20 mm, optionally about 10 mm, and/or (iii) the electroconductive member has an area extending along the plate direction which is from 50 to 100 % of the area of the layer of friction material.

8. A brake pad according to any one of claims 1 to 7 which is (i) an automotive brake pad for an automobile, motor cycle or truck, or (ii) a railway brake pad for a railway locomotive, carriage or truck.

9. A method of manufacturing a brake pad, the method comprising the steps of:
(a) providing in a mould cavity an assembly comprising a first portion comprising an electroconductive member (314), which electroconductive member comprises an electroconductive planar plate (320), within a fibre-containing resin and, adjacent to the first portion, a second portion comprising a friction material, the first portion having a front surface forming an interface with a rear surface of the friction material, wherein the electroconductive member is profiled in a thickness direction of the first portion to provide at least one projection extending towards the interface or into the friction material, wherein the at least one projection (334) comprises at least one deformed portion extending from the planar plate towards the interface or into the friction material, the deformed portion being formed by punching a hole in the planar plate to form a punched extension extending from the planar plate towards the interface or into the friction material, and wherein the planar plate (320) has an array of integral extending portions (322) extending from the planar plate into the fibre-containing resin, the extending portions being formed by punching respective holes in the planar plate; and
(b) moulding the assembly to form a brake pad comprising a layer of the friction material, formed from the second portion, integrally moulded with a backing plate, formed from the first portion,
wherein the backing plate comprises the electroconductive member moulded within a plate of fibre-reinforced polymer resin, the electroconductive member being profiled in a thickness direction of the plate to provide at least one projection extending towards the interface or into the friction material, the electroconductive member extending along a plate direction and arranged to function as a wear indicator for the brake pad, the at least one deformed portion functioning to enhance a bond between the electroconductive member and the plate of fibre-reinforced polymer resin and the extending portions (322) affixing together the electroconductive member and the plate of fibre-reinforced polymer resin.

10. A method according to claim 9 wherein in step (a) the fibre-reinforced polymer resin is introduced into the mould cavity by injection of the fibre-reinforced polymer resin around the electroconductive member which is located in the cavity, optionally (i) wherein in step (b) the layer of friction material is located adjacent to the assembly and adjacent contacting surfaces of the layer of friction material and the assembly are bonded together during the moulding step (b) and/or (ii) in step (b) the layer of friction material is a rigid preform, further optionally which has been pre-shaped to the final shape and configuration of the layer of friction material of the brake pad.

11. A method of manufacturing a brake pad, the method comprising the steps of:
(a) providing a layer of fibrous material;
(b) impregnating a resin powder into the layer of fibrous material to form a preform layer;
(c) forming in a mould cavity an assembly comprising a sandwich of an electroconductive member between two portions of the preform layer and, adjacent to the sandwich, a friction material, wherein the electroconductive member comprises an electroconductive planar plate (320) and is profiled in a thickness direction of the sandwich to provide at least one projection extending towards an interface of the sandwich and friction material or into the layer of friction material, wherein the at least one projection (334) comprises at least one deformed portion extending from the planar plate towards the interface or into the friction material, the deformed portion being formed by punching a hole in the planar plate to form a punched extension extending from the planar plate towards the interface or into the friction material, and wherein the planar plate (320) has an array of integral extending portions (322) extending from the planar plate into the preform layer, the extending portions being formed by punching respective holes in the planar plate; and
(d) moulding the assembly to form a brake pad comprising a layer of friction material integrally moulded with a backing plate, formed from the sandwich,
wherein the backing plate comprises the electroconductive member moulded within a body of a fibre-reinforced polymer resin, the body and the electroconductive member forming first and second aligned plates extending along a plate direction, the body having a front surface forming an interface with a rear surface of the layer of friction material, wherein the electroconductive member is profiled in a thickness direction of the body to provide at least one projection extending towards the interface or into the layer of friction material and arranged to function as a wear indicator for the brake pad, the at least one deformed portion functioning to enhance a bond between the electroconductive member and the plate of fibre-reinforced polymer resin and the extending portions (322) affixing together the electroconductive member and the plate of fibre-reinforced polymer resin.

12. A method according to claim 11 wherein step (b) comprises the following substeps: (i) the polymer resin powder is scattered onto the layer of fibrous material; (ii) an alternating electrical field is applied across the layer of fibrous material to impregnate the polymer resin powder through the thickness of the layer of fibrous material; (iii) the impregnated layer is compressed to consolidate the resin-impregnated fibrous layer; (iv) the consolidated layer is heated so as at least partly to cure the resin; and (v) the at least partly cured layer is cut to form a plurality of the portions of the preform layer, optionally (i) wherein in step (c) the layer of friction material is located adjacent to the assembly and adjacent contacting surfaces of the layer of friction material and the assembly are bonded together during the moulding step (d), and/or (ii) wherein in step (c) the friction material is a rigid preform layer, optionally which has been pre-shaped to the final shape and configuration of the layer of friction material of the brake pad.

13. A method according to any one of claims 9 to 12 wherein (i) a free end of at least one projection is within the layer of friction material and spaced forwardly from the interface by a distance of from 1 to 8 mm, optionally about 3 mm, and/or (ii) a plurality of the projections is provided and respective free ends of at least two of the projections are located at different distances relative to the interface, optionally wherein respective free ends of the plurality of projections are located at a range of from 0 to 5 mm, further optionally from 1 to 5 mm, from the interface.

14. A method according to any one of claims 9 to 13 wherein the electroconductive member has a rear surface which defines a rear surface of the backing plate or is located a distance of from 0.1 to 3 mm, optionally from 0.5 to 2 mm, from a rear surface of the backing plate.

15. A method according to any one of claims 9 to 14 wherein (i) the fibre-reinforced resin comprises a thermosetting resin comprising reinforcing fibres, optionally a cross-linked phenolic resin comprising reinforcing fibres, optionally further comprising at least one filler material, and further optionally wherein the reinforcing fibres comprise a layer of non-woven fibres, and/or (ii) the friction material comprises a cross-linked phenolic resin and friction particles dispersed therein.

## Patentansprüche

1. Bremsbelag (302) mit einer Schicht aus Reibungsmaterial (304), die integral mit einer Rückplatte (306) geformt ist, wobei die Rückplatte ein elektrisch leitendes Element (314) aufweist, das eine elektrisch leitende ebene Platte (320) aufweist, die zumindest teilweise in einer Platte (316) aus einem faserverstärkten Polymerharz (318) geformt ist, wobei sich das elektrisch leitende Element entlang einer Plattenrichtung erstreckt, wobei die Rückplatte eine Vorderseite (308) hat, die eine Grenzfläche (310) zu einer Rückseite (312) der Schicht aus Reibungsmaterial bildet, wobei das elektrisch leitende Element in einer Dickenrichtung der Rückplatte profiliert ist, um wenigstens einen Vorsprung (334) zu schaffen, der sich zur Grenzfläche oder in die Schicht aus Reibungsmaterial erstreckt und ausgestaltet ist, um als ein Verschleißindikator für den Bremsbelag zu funktionieren, wobei der wenigstens eine Vorsprung (334) wenigstens einen verformten Abschnitt aufweist, der sich von der ebenen Platte zur Grenzfläche oder in die Schicht aus Reibungsmaterial erstreckt, wobei der verformte Abschnitt durch Stanzen eines Lochs in der ebenen Platte zum Bilden einer sich von der ebenen Platte zur Grenzfläche oder in die Schicht aus Reibungsmaterial erstreckenden Lochverlängerung gebildet ist, wobei der verformte Abschnitt zum Fördern einer Bindung zwischen dem elektrisch leitenden Element und der Platte aus faserverstärkten Polymerharz funktioniert, und wobei die ebene Platte (320) eine Anordnung von integralen hineinragenden Abschnitten (322) aufweist, die sich von der ebenen Platte in die Platte aus faserverstärktem Polymerharz erstrecken, um das elektrisch leitende Element und die Platte aus faserverstärktem Polymerharz aneinander zu befestigen, wobei die hineinragenden Abschnitte durch Stanzen der jeweiligen Löcher in der ebenen Platte gebildet sind.

2. Bremsbelag nach Anspruch 1, bei welchem (i) ein freies Ende (342) wenigstens eines Vorsprungs (334) in der Schicht aus Reibungsmaterial ist und von der Grenzfläche um einen Abstand von 1 bis 8 mm, bevorzugt etwa 3 mm nach vorne beabstandet ist und/oder (ii) mehrere Vorsprünge vorgesehen sind und jeweilige freie Enden von wenigstens zwei der Vorsprünge in unterschiedlichen Abständen relativ zur Grenzfläche positioniert sind, wobei die jeweiligen freien Enden der mehreren Vorsprünge bevorzugt in einem Bereich von 0 bis 5 mm, bevorzugter von 1 bis 5 mm von der Grenzfläche positioniert sind.

3. Bremsbelag nach Anspruch 1 oder Anspruch 2, bei welchem (i) das elektrisch leitende Element aus einem Metall, bevorzugt einem Stahl, bevorzugter aus einem mit einer Haftungsförderschicht zum Fördern der Haftung am faserverstärkten Polymerharz behandelten Stahl besteht und optional (ii) das elektrisch leitende Metallelement eine Platte mit einer Wandstärke von 0,5 bis 3 mm ist.

4. Bremsbelag nach einem der Ansprüche 1 bis 3, bei welchem das elektrisch leitende Element eine Rückseite (328) hat, die eine Rückseite (330) der Rückplatte definiert oder in einem Abstand von 0,1 bis 3 mm, bevorzugter von 0,5 bis 2 mm von einer Rückseite der Rückplatte positioniert ist.

5. Bremsbelag nach einem der Ansprüche 1 bis 4, bei welchem (i) das faserverstärkte Polymerharz ein Duroplast harz mit Verstärkungsfasern, bevorzugt ein vernetztes Phenolharz mit Verstärkungsfasern, bevorzugt ferner mit wenigstens einem Füllstoff aufweist und/oder (ii) das Reibungsmaterial ein vernetztes Phenolharz und darin verteilte Reibungspartikel aufweist.

6. Bremsbelag nach einem der Ansprüche 1 bis 5, ferner aufweisend elektrisches Kontaktelement (332), das mit dem elektrisch leitenden Element zur elektrischen Verbindung mit einem elektrischen Bremsverschleiß-Sensorsystem verbunden ist.

7. Bremsbelag nach einem der Ansprüche 1 bis 6, bei welchem (i) die Rückplatte eine Dicke von 1 bis 10 mm, bevorzugt etwa 5 mm hat und/oder (ii) die Schicht aus Reibungsmaterial eine Dicke von 5 bis 20 mm, bevorzugt etwa 10 mm hat und/oder (iii) das elektrisch leitende Element einen entlang der Plattenrichtung verlaufenden Bereich hat, der 50 bis 100% des Bereichs der Schicht aus Reibungsmaterial beträgt

8. Bremsbelag nach einem der Ansprüche 1 bis 7, welches (i) ein Automobilbremsbelag für ein Auto, Motorrad oder Lastwagen ist oder (ii) ein Bahnbremsbelag für eine Lokomotive, Waggon oder Eisenbahn-Lkw ist.

9. Verfahren zum Herstellen eines Bremsbelags, wobei das Verfahren die Schritte aufweist:
(a) Schaffen einer Anordnung mit einem ersten Teil mit einem elektrisch leitenden Element (314), das eine elektrisch leitende ebene Platte (320) aufweist, in einem Fasern enthaltenden Harz, und angrenzend an den ersten Teil einem zweiten Teil mit einem Reibungsmaterial in einem Formhohlraum, wobei der erste Teil eine Vorderseite hat, die eine Grenzfläche zu einer Rückseite des Reibungsmaterials bildet, wobei das elektrisch leitende Element in einer Dickenrichtung des ersten Teils profiliert wird, um wenigstens einen Vorsprung zu schaffen, der sich zur Grenzfläche oder in das Reibungsmaterial erstreckt, wobei der wenigstens eine Vorsprung (334) wenigstens einen verformten Abschnitt aufweist, der sich von der ebenen Platte zur Grenzfläche oder in das Reibungsmaterial erstreckt, wobei der verformte Abschnitt durch Stanzen eines Lochs in der ebenen Platte zum Bilden einer sich von der ebenen Platte zur Grenzfläche oder in das Reibungsmaterial erstreckenden Lochverlängerung gebildet wird, und wobei die ebene Platte (320) eine Anordnung von integralen hineinragenden Abschnitten (322) aufweist, die sich von der ebenen Platte in das Fasern enthaltende Harz erstrecken, wobei die hineinragenden Abschnitte durch Stanzen von jeweiligen Löchern in der ebenen Platte gebildet werden; und
(b) Formen der Anordnung, um einen Bremsbelag mit einer Schicht aus dem Reibungsmaterial zu bilden, die aus dem zweiten Teil gebildet ist und integral mit einer Rückplatte, die aus dem ersten Teil gebildet ist, geformt ist, wobei die Rückplatte das elektrisch leitendes Element aufweist, das in einer Platte aus faserverstärktem Polymerharz geformt ist, wobei das elektrisch leitende Element in einer Dickenrichtung der Platte profiliert ist, um wenigstens einen Vorsprung zu schaffen, der sich zur Grenzfläche oder in das Reibungsmaterial erstreckt, wobei sich das elektrisch leitende Element entlang einer Plattenrichtung erstreckt und ausgestaltet ist, um als ein Verschleißindikator für den Bremsbelag zu funktionieren, wobei der wenigstens eine verformte Abschnitt funktioniert, um eine Bindung zwischen dem elektrisch leitenden Element und der Platte aus faserverstärktem Polymerharz zu fördern, und die hineinragenden Abschnitte (322) das elektrisch leitende Element und die Platte aus faserverstärktem Polymerharz aneinander befestigen.

10. Verfahren nach Anspruch 9, bei welchem in Schritt (a) das faserverstärkte Polymerharz durch Einspritzen das faserverstärkten Polymerharzes um das elektrisch leitende Element, das im Hohlraum liegt, in den Formhohlraum eingebracht wird, wobei bevorzugt (i) in Schritt (b) die Schicht aus Reibungsmaterial angrenzend an die Anordnung positioniert wird und angrenzende Kontaktflächen der Schicht aus Reibungsmaterial und die Anordnung während des Formschrittes (b) aneinandergebunden werden und/oder (ii) in Schritt (b) die Schicht aus Reibungsmaterial eine steife Vorform ist, welche bevorzugter zur finalen Form und Konfiguration der Schicht aus Reibungsmaterial des Bremsbelags vorgeformt worden ist.

11. Verfahren zum Herstellen eines Bremsbelags, wobei das Verfahren die Schritte aufweist:
(a) Bereitstellen einer Schicht aus Fasermaterial;
(b) Imprägnieren eines Harzpulvers in die Schicht aus Fasermaterial, um eine Vorformschicht zu bilden;
(c) Schaffen einer Anordnung mit einer Schichtanordnung eines elektrisch leitenden Elements zwischen zwei Abschnitten der Vorformschicht und einem Reibungsmaterial angrenzend an die Schichtanordnung, wobei das elektrisch leitende Element eine elektrisch leitende ebene Platte (320) aufweist und in einer Dickenrichtung der Schichtanordnung profiliert wird, um wenigstens einen Vorsprung zu schaffen, der sich zu einer Grenzfläche der Schichtanordnung und des Reibungsmaterials oder in die Schicht aus Reibungsmaterial erstreckt, wobei der wenigstens eine Vorsprung (334) wenigstens einen verformten Abschnitt aufweist, der sich von der ebenen Platte zur Grenzfläche oder in das Reibungsmaterial erstreckt, wobei der verformte Abschnitt durch Stanzen eines Lochs in der ebenen Platte zum Bilden einer sich von der ebenen Platte zur Grenzfläche oder in das Reibungsmaterial erstreckenden Lochverlängerung gebildet wird, und wobei die ebene Platte (320) eine Anordnung von integralen hineinragenden Abschnitten (322) aufweist, die sich von der ebenen Platte in die Vorformschicht erstrecken, wobei die hineinragenden Abschnitte durch Stanzen von jeweiligen Löchern in der ebenen Platte gebildet werden; und
(d) Formen der Anordnung, um einen Bremsbelag mit einer Schicht aus Reibungsmaterial zu bilden, die integral mit einer Rückplatte, die aus der Schichtanordnung gebildet ist, geformt ist,
wobei die Rückplatte das elektrisch leitendes Element aufweist, das in einem Körper aus faserverstärktem Polymerharz geformt ist, wobei der Körper und das elektrisch leitende Element erste und zweite ausgerichtete Platten bilden, die sich entlang einer Plattenrichtung erstrecken, wobei der Körper eine Vorderseite hat, die eine Grenzfläche zu einer Rückseite der Schicht aus Reibungsmaterial bildet, wobei das elektrisch leitende Element in einer Dickenrichtung des Körpers profiliert ist, um wenigstens einen Vorsprung zu schaffen, der sich zur Grenzfläche oder in die Schicht aus Reibungsmaterial erstreckt, und ausgestaltet ist, um als ein Verschleißindikator für den Bremsbelag zu funktionieren, wobei der wenigstens eine verformte Abschnitt funktioniert, um eine Bindung zwischen dem elektrisch leitenden Element und der Platte aus faserverstärkten Polymerharz zu fördern, und die hineinragenden Abschnitte (322) das elektrisch leitende Element und die Platte aus faserverstärktem Polymerharz aneinander befestigen.

12. Verfahren nach Anspruch 11, bei welchem Schritt (b) die folgenden Teilschritte aufweist: (i) das Polymerharzpulver wird auf die Schicht aus Fasermaterial verstreut; (ii) ein Wechselstromfeld wird über die Schicht aus Fasermaterial gelegt, um das Polymerharzpulver durch die Dicke der Schicht aus Fasermaterial zu imprägnieren; (iii) die imprägnierte Schicht wird zusammengedrückt, um die harzimprägnierte Faserschicht zu verfestigen; (iv) die verfestigte Schicht wird erhitzt, um so wenigstens teilweise das Harz zu härten; und (v) die wenigstens teilweise gehärtete Schicht wird geschnitten, um mehrere Teile der Vorformschicht zu bilden, wobei bevorzugt (i) in Schritt (c) die Schicht aus Reibungsmaterial angrenzend an die Anordnung positioniert wird und angrenzende Kontaktflächen der Schicht aus Reibungsmaterial und die Anordnung während des Formschritts (d) aneinandergebunden werden, und/oder (ii) in Schritt (c) das Reibungsmaterial eine steife Vorformschicht ist, welche bevorzugt zur finalen Form und Konfiguration der Schicht aus Reibungsmaterial des Bremsbelags vorgeformt worden ist.

13. Verfahren nach einem der Ansprüche 9 bis 12, bei welchem (i) ein freies Ende wenigstens eines Vorsprungs in der Schicht aus Reibungsmaterial ist und von der Grenzfläche um einen Abstand von 1 bis 8 mm, bevorzugt etwa 3 mm nach vorne beabstandet ist und/oder (ii) mehrere der Vorsprünge vorgesehen sind und jeweilige freie Enden von wenigstens zwei der Vorsprünge in unterschiedlichen Abständen relativ zur Grenzfläche positioniert sind, wobei die jeweiligen freien Enden der mehreren Vorsprünge bevorzugt in einem Bereich von 0 bis 5 mm, bevorzugter von 1 bis 5 mm von der Grenzfläche positioniert sind.

14. Verfahren nach einem der Ansprüche 9 bis 13, bei welchem das elektrisch leitende Element eine Rückseite hat, die eine Rückseite der Rückplatte definiert oder in einem Abstand von 0,1 bis 3 mm, bevorzugter von 0,5 bis 2 mm von einer Rückseite der Rückplatte positioniert ist.

15. Verfahren nach einem der Ansprüche 9 bis 14, bei welchem (i) das faserverstärkte Harz ein Duroplast harz mit Verstärkungsfasern, bevorzugt ein vernetztes Phenolharz mit Verstärkungsfasern, bevorzugt ferner mit wenigstens einem Füllstoff aufweist, und wobei die Verstärkungsfasern bevorzugt eine Schicht aus Vliesfasern aufweisen, und/oder (ii) das Reibungsmaterial ein vernetztes Phenolharz und darin verteilte Reibungspartikel aufweist.

## Revendications

1. Plaquette de frein (302) comprenant une couche de matériau de friction (304) qui est moulée d'un seul tenant avec une plaque de support (306), dans laquelle la plaque de support comprend un élément électroconducteur (314), lequel élément électroconducteur (314) comprend une plaque plane électroconductrice (320) qui est moulée au moins partiellement à l'intérieur d'une plaque (316) d'une résine polymère renforcée par des fibres (318), l'élément électroconducteur s'étendant le long d'une direction de plaque, la plaque de support ayant une surface avant (308) qui forme une interface (310) avec une surface arrière (312) de la couche de matériau de friction, dans laquelle l'élément électroconducteur est profilé dans une direction d'épaisseur de la plaque de support pour fournir au moins une saillie (334) qui s'étend vers l'interface ou vers l'intérieur de la couche de matériau de friction, et est agencé pour fonctionner comme un indicateur d'usure de la plaquette de frein, dans laquelle ladite au moins une saillie (334) comprend au moins une partie déformée s'étendant de la plaque plane vers l'interface ou vers l'intérieur de la couche de matériau de friction, la partie déformée étant formée en perçant un trou dans la plaque plane pour former une extension perforée s'étendant de la plaque plane vers l'interface ou vers l'intérieur de la couche de matériau de friction, la partie déformée fonctionnant pour favoriser une liaison entre l'élément électroconducteur et la plaque de résine polymère renforcée par des fibres, et dans laquelle la plaque plane (320) a un réseau de parties d'extension intégrantes (322) s'étendant de la plaque plane vers l'intérieur de la plaque de résine polymère renforcée par des fibres pour fixer ensemble l'élément électroconducteur et la plaque de résine polymère renforcée par des fibres, les parties d'extension étant formées en perçant des trous respectifs dans la plaque plane.

2. Plaquette de frein selon la revendication 1, dans laquelle (i) une extrémité libre (342) d'au moins une saillie (334) est à l'intérieur de la couche de matériau de friction et est espacée vers l'avant de l'interface d'une distance de 1 à 8 mm, éventuellement d'environ 3 mm, et / ou dans laquelle (ii) une pluralité des saillies est prévue et les extrémités libres respectives d'au moins deux des saillies sont situées à des distances différentes par rapport à l'interface, éventuellement dans laquelle les extrémités libres respectives de la pluralité des saillies sont situées à une distance comprise entre 0 et 5 mm, en outre éventuellement comprise entre 1 et 5 mm, de l'interface.

3. Plaquette de frein selon la revendication 1 ou 2, dans laquelle (i) l'élément électroconducteur est composé d'un métal, éventuellement d'un acier, en outre éventuellement d'un acier traité avec une couche favorisant l'adhérence pour favoriser l'adhérence à la résine polymère renforcée par des fibres, et dans laquelle éventuellement (ii) l'élément électroconducteur métallique est une plaque ayant une épaisseur de paroi comprise entre 0,5 et 3 mm.

4. Plaquette de frein selon l'une quelconque des revendications 1 à 3, dans laquelle l'élément électroconducteur a une surface arrière (328) qui définit une surface arrière (330) de la plaque de support, ou est situé à une distance comprise entre 0,1 et 3 mm, éventuellement comprise entre 0,5 et 2 mm, d'une surface arrière de la plaque de support.

5. Plaquette de frein selon l'une quelconque des revendications 1 à 4, dans laquelle (i) la résine polymère renforcée par des fibres comprend une résine thermodurcie comprenant des fibres de renforcement, comprend éventuellement une résine phénolique réticulée comprenant des fibres de renforcement, éventuellement comprenant en outre au moins un matériau de remplissage, et / ou dans laquelle (ii) le matériau de friction comprend une résine phénolique réticulée et des particules de friction qui y sont dispersées.

6. Plaquette de frein selon l'une quelconque des revendications 1 à 5, comprenant en outre un élément de contact électrique (332) qui est connecté à l'élément électroconducteur pour permettre une connexion électrique à un système de capteur d'usure de frein électrique.

7. Plaquette de frein selon l'une quelconque des revendications 1 à 6, dans laquelle (i) la plaque de support a une épaisseur comprise entre 1 et 10 mm, éventuellement une épaisseur d'environ 5 mm, et / ou dans laquelle (ii) la couche de matériau de friction a une épaisseur comprise entre 5 et 20 mm, éventuellement une épaisseur d'environ 10 mm, et / ou dans laquelle (iii) l'élément électroconducteur a une aire de surface qui s'étend le long de la direction de plaque et qui représente de 50 à 100% de l'aire de surface de la couche de matériau de friction.

8. Plaquette de frein selon l'une quelconque des revendications 1 à 7, laquelle est (i) une plaquette de frein de véhicule pour une automobile, une motocyclette ou un camion, ou laquelle est (ii) une plaquette de frein ferroviaire pour une locomotive de train, un chariot de train ou un wagon de train.

9. Procédé de fabrication d'une plaquette de frein, le procédé comprenant les étapes de :
(a) prévoir, dans une cavité de moule, un assemblage comprenant une première partie qui comprend un élément électroconducteur (314), lequel élément électroconducteur comprend une plaque plane électroconductrice (320) à l'intérieur d'une résine contenant des fibres, et comprenant, adjacente à la première partie, une deuxième partie qui comprend un matériau de friction, la première partie ayant une surface avant qui forme une interface avec une surface arrière du matériau de friction, dans lequel l'élément électroconducteur est profilé dans une direction d'épaisseur de la première partie pour fournir au moins une saillie qui s'étend vers l'interface ou vers l'intérieur du matériau de friction, dans lequel ladite au moins une saillie (334) comprend au moins une partie déformée qui s'étend de la plaque plane vers l'interface ou vers l'intérieur du matériau de friction, la partie déformée étant formée en perçant un trou dans la plaque plane pour former une extension perforée qui s'étend de la plaque plane vers l'interface ou vers l'intérieur du matériau de friction, et dans lequel la plaque plane (320) a un réseau de parties d'extension intégrantes (322) s'étendant de la plaque plane vers l'intérieur de la résine contenant des fibres, les parties d'extension étant formées en perçant des trous respectifs dans la plaque plane ; et
(b) mouler l'assemblage pour former une plaquette de frein qui comprend une couche du matériau de friction qui est formée à partir de la deuxième partie et moulée d'un seul tenant avec une plaque de support qui est formée à partir de la première partie, dans lequel la plaque de support comprend l'élément électroconducteur qui est moulé à l'intérieur d'une plaque de résine polymère renforcée par des fibres, l'élément électroconducteur étant profilé dans une direction d'épaisseur de la plaque pour fournir au moins une saillie s'étendant vers l'interface ou vers l'intérieur du matériau de friction, l'élément électroconducteur s'étendant le long d'une direction de plaque et étant agencé pour fonctionner comme un indicateur d'usure de la plaquette de frein, ladite au moins une partie déformée fonctionnant pour favoriser une liaison entre l'élément électroconducteur et la plaque de résine polymère renforcée par des fibres, et les parties d'extension (322) fixant ensemble l'élément électroconducteur et la plaque de résine polymère renforcée par des fibres.

10. Procédé selon la revendication 9, dans lequel, à l'étape (a), la résine polymère renforcée par des fibres est introduite dans la cavité de moule par injection de la résine polymère renforcée par des fibres autour de l'élément électroconducteur qui est situé dans la cavité, éventuellement (i) dans lequel, à l'étape (b), la couche de matériau de friction est située de manière adjacente à l'assemblage, et les surfaces de contact adjacentes de la couche de matériau de friction et de l'assemblage sont liées ensemble pendant l'étape (b) de moulage, et / ou (ii) dans lequel, à l'étape (b), la couche de matériau de friction est une préforme rigide, qui a été en outre éventuellement préformée selon les forme et configuration finales de la couche de matériau de friction de la plaquette de frein.

11. Procédé de fabrication d'une plaquette de frein, le procédé comprenant les étapes de :
(a) fournir une couche de matériau fibreux ;
(b) imprégner une poudre de résine dans la couche de matériau fibreux pour former une couche de préforme ;
(c) former, dans une cavité de moule, un assemblage comprenant un sandwich d'un élément électroconducteur entre deux parties de la couche de préforme et, adjacent au sandwich, un matériau de friction, dans lequel l'élément électroconducteur comprend une plaque plane électroconductrice (320) et est profilé dans une direction d'épaisseur du sandwich pour fournir au moins une saillie qui s'étend vers une interface du sandwich et du matériau de friction ou vers l'intérieur de la couche du matériau de friction, dans lequel ladite au moins une saillie (334) comprend au moins une partie déformée qui s'étend de la plaque plane vers l'interface ou vers l'intérieur du matériau de friction, la partie déformée étant formée en perçant un trou dans la plaque plane pour former une extension perforée qui s'étend de la plaque plane vers l'interface ou vers l'intérieur du matériau de friction, et dans lequel la partie plane (320) a un réseau de parties d'extension intégrantes (322) s'étendant de la plaque plane vers l'intérieur de la couche de préforme, les parties d'extension étant formées en perçant des trous respectifs dans la plaque plane ; et
(d) mouler l'assemblage pour former une plaquette de frein qui comprend une couche de matériau de friction qui est moulée d'un seul tenant avec une plaque de support, formée à partir du sandwich, dans lequel la plaque de support comprend l'élément électroconducteur qui est moulé à l'intérieur d'un corps d'une résine polymère renforcée par des fibres, le corps et l'élément électroconducteur formant des première et deuxième plaques alignées qui s'étendent le long d'une direction de plaque, le corps ayant une surface avant qui forme une interface avec une surface arrière de la couche de matériau de friction, dans lequel l'élément électroconducteur est profilé dans une direction d'épaisseur du corps pour fournir au moins une saillie qui s'étend vers l'interface ou vers l'intérieur de la couche de matériau de friction, et est agencé pour fonctionner comme un indicateur d'usure de la plaquette de frein, ladite au moins une partie déformée fonctionnant pour favoriser une liaison entre l'élément électroconducteur et la plaque de résine polymère renforcée par des fibres, et les parties d'extension (322) fixant ensemble l'élément électroconducteur et la plaque de résine polymère renforcée par des fibres.

12. Procédé selon la revendication 11, dans lequel l'étape (b) comprend les sous-étapes suivantes : (i) la poudre de résine polymère est dispersée sur la couche de matériau fibreux ; (ii) un champ électrique alternatif est appliqué aux bornes de la couche de matériau fibreux pour imprégner la poudre de résine polymère à travers l'épaisseur de la couche de matériau fibreux ; (iii) la couche imprégnée est comprimée pour consolider la couche fibreuse imprégnée de résine ; (iv) la couche consolidée est chauffée de manière à durcir au moins partiellement la résine ; et (v) ladite couche au moins partiellement durcie est coupée pour former une pluralité des parties de la couche de préforme, éventuellement (i) dans lequel, à l'étape (c), la couche de matériau de friction est située de manière adjacente à l'assemblage, et les surfaces de contact adjacentes de la couche de matériau de friction et de l'assemblage sont liées ensemble pendant l'étape (d) de moulage, et / ou (ii) dans lequel, à l'étape (c), le matériau de friction est une couche de préforme rigide qui a été éventuellement préformée selon les forme et configuration finales de la couche de matériau de friction de la plaquette de frein.

13. Procédé selon l'une quelconque des revendications 9 à 12, dans lequel (i) une extrémité libre d'au moins une saillie est à l'intérieur de la couche de matériau de friction et est espacée vers l'avant de l'interface d'une distance de 1 à 8 mm, éventuellement d'environ 3 mm, et / ou dans lequel (ii) une pluralité des saillies est prévue et les extrémités libres respectives d'au moins deux des saillies sont situées à des distances différentes par rapport à l'interface, éventuellement dans lequel les extrémités libres respectives de la pluralité des saillies sont situées à une distance comprise entre 0 et 5 mm, en outre éventuellement comprise entre 1 et 5 mm, de l'interface.

14. Procédé selon l'une quelconque des revendications 9 à 13, dans lequel l'élément électroconducteur a une surface arrière qui définit une surface arrière de la plaque de support, ou est situé à une distance comprise entre 0,1 et 3 mm, éventuellement comprise entre 0,5 à 2 mm, d'une surface arrière de la plaque de support.

15. Procédé selon l'une quelconque des revendications 9 à 14, dans lequel (i) la résine renforcée par des fibres comprend une résine thermodurcissable comprenant des fibres de renforcement, comprend éventuellement une résine phénolique réticulée comprenant des fibres de renforcement, éventuellement comprenant en outre au moins un matériau de remplissage, et en outre éventuellement dans lequel les fibres de renforcement comprennent une couche de fibres non tissées, et / ou dans lequel (ii) le matériau de friction comprend une résine phénolique réticulée et des particules de friction qui y sont dispersées.
